(19) Europäisches Patentamt
European Patent Office
Office européen des brevets

(11) **EP 1 098 236 B1**

(12) **EUROPÄISCHE PATENTSCHRIFT**

(45) Veröffentlichungstag und Bekanntmachung des Hinweises auf die Patenterteilung:
**04.05.2005 Patentblatt 2005/18**

(51) Int Cl.⁷: **G05B 19/042**

(21) Anmeldenummer: **00121923.7**

(22) Anmeldetag: **07.10.2000**

(54) **Übertragungseinrichtung**

Transmission device

Dispositif de transmission

(84) Benannte Vertragsstaaten:
**DE FR GB IT**

(30) Priorität: **05.11.1999 DE 19953192**

(43) Veröffentlichungstag der Anmeldung:
**09.05.2001 Patentblatt 2001/19**

(73) Patentinhaber: **ROBERT BOSCH GMBH**
**70442 Stuttgart (DE)**

(72) Erfinder:
- **Rupp, Ingolf**
  **71636 Ludwigsburg (DE)**
- **Lehner, Michael**
  **75417 Muehlacker (DE)**

(56) Entgegenhaltungen:
EP-A- 0 903 655  WO-A-96/01979
WO-A-98/39131  FR-A- 2 685 958
US-A- 4 924 830  US-A- 5 586 305
US-A- 5 659 302

**Beschreibung**

Die vorliegende Erfindung betrifft eine Vorrichtung gemäß dem Oberbegriff des Patentanspruchs 1, d.h. eine Einrichtung zur Übertragung einer von einem Sensor erfaßten Größe an eine die Größe verarbeitende Verarbeitungseinrichtung.

Der genannte Sensor ist beispielsweise ein Absolutwinkelgeber, durch welchen beispielsweise die Winkelstellung einer Welle erfaßbar ist. Bei der Welle kann es sich beispielsweise um die Kurbelwelle oder die Nockenwelle einer Brennkraftmaschine handeln. Die von einem solchen Sensor erfaßte Größe ist der Winkel, den die überwachte Welle zum Erfassungszeitpunkt einnimmt.

Wenn der Sensor ein Absolutwinkelgeber zur Erfassung der Winkelstellung der Kurbelwelle oder Nockenwelle einer Brennkraftmaschine ist, ist die genannte Verarbeitungseinrichtung beispielsweise ein Mikroprozessor oder ein Mikrocontroller des Steuergerätes des die betreffende Brennkraftmaschine enthaltenden Kraftfahrzeuges. Das Kraftfahrzeug-Steuergerät benötigt die genannten Winkelstellungen unter anderem zur Festlegung der Zeitpunkte von Kraftstoffeinspritzung und Zündung.

Obgleich es sowohl für die Übernahme der vom Absolutwinkelgeber oder einem sonstigen Sensor erfaßten Größen in die die Größen benötigende Verarbeitungseinrichtung als auch für die Art und Weise der Übertragung der betreffenden Größen vom Sensor zu der diese benötigenden Verarbeitungseinrichtung verschiedene Möglichkeiten gibt, können diese Vorgänge Probleme bereiten. Dies wird nachfolgend beschrieben.

Die Übernahme der vom Sensor erfaßten Größen in die Verarbeitungseinrichtung kann

A1) jeweils im Ansprechen auf spezielle Anforderung der Verarbeitungseinrichtung (beispielsweise im Ansprechen auf Anforderungen eines in der Verarbeitungseinrichtung ablaufenden Programms), oder

A2) automatisch in vorbestimmten zeitlichen Abständen (beispielsweise alle 10 ms)

erfolgen.

Bei der erstgenannten Möglichkeit (A1) erfolgt die Anforderung normalerweise immer genau dann, wenn die Verarbeitungseinrichtung (beispielsweise ein in dieser ablaufendes Programm) die betreffende Information gerade benötigt. Diese Vorgehensweise hat den Vorteil, daß die dabei erhaltenen Informationen immer relativ aktuell sind. Nachteilig hieran ist jedoch, daß die Anforderung der Informationen mit einem relativ hohen Aufwand verbunden sein kann. Dies kann insbesondere bei sehr häufigen Anforderungen (beispielsweise wenn die Informationen vor jeder Zündung abgefragt werden müssen) zu einer sehr starken Belastung der Verarbeitungseinrichtung führen.

Die zweite der vorstehend genannten Möglichkeiten (A2) hat eine vergleichsweise geringe Belastung der Verarbeitungseinrichtung zur Folge. Allerdings sind die erhaltenen Informationen zum Zeitpunkt der Verwendung derselben nicht immer aktuell. Wenn die Informationen beispielsweise nur alle 10 ms eingelesen werden, können sie zu dem Zeitpunkt, zu dem sie verwendet werden, bereits 10 ms alt sein, was bei einer schnell drehenden Welle (einer mit einer hohen Drehzahl drehenden Brennkraftmaschine) erhebliche Ungenauigkeiten zur Folge haben kann.

Für die Art und Weise der Übertragung der vom Sensor erfaßten Größen zur Verarbeitungseinrichtung existieren ebenfalls mehrere Möglichkeiten, nämlich

B1) Übertragung der zu übertragenden Größe als analoges Signal (Spannungspegel entspricht einem gewissen Winkel),

B2) Übertragung der zu übertragenden Größe durch ein impulsweitenmoduliertes Signal (der Winkel wird durch das Verhältnis von Hoch- und Niedrigpegel-Phasen definiert, und

B3) Übertragung der zu übertragenden Größe als digitales Signal, welches üblicherweise seriell übertragen wird.

Die erstgenannte Möglichkeit (B1) weist den Vorteil auf, daß eine relativ konstante Zeitverzögerung vorhanden ist, und daß die Übernahme der Größen in die Verarbeitungseinrichtung sowohl nach Möglichkeit A1 als auch nach Möglichkeit A2 erfolgen kann. Nachteilig ist, daß die erforderlichen D/A und/oder A/D-Wandlungen mit einem hohen Aufwand verbunden sind, und daß die Übertragung sehr störanfällig ist (insbesondere können die von der Zündung verursachten elektromagnetischen Felder die Signalübertragung stören und/oder die übertragenen Signale verfälschen).

Die zweite Möglichkeit (B2) ist sehr robust gegen Störungen und ermöglicht eine vergleichsweise einfache Umsetzung und Auswertung. Allerdings ist nur die Übernahme nach Möglichkeit A2 sinnvoll, denn die Informationen sind nur immer am Ende einer Periodendauer des impulsweitenmodulierten Signals aktuell.

Die dritte Möglichkeit (B3) ist ebenfalls sehr robust gegen Störungen. Allerdings ist auch hier nur die Übernahme nach Möglichkeit A2 möglich, da die Informationen nur zu diskreten Zeitpunkten übertragen werden (können).

Aus den vorstehenden Ausführungen ist ersichtlich, daß es trotz der verschiedenen Möglichkeiten zur Übertragung der vom Sensor erfaßten Größen zur Verarbeitungseinrichtung und trotz der verschiedenen Möglichkeiten zu Übernahme dieser Größen in die Verarbeitungseinrichtung selbst bei Inkaufnahme einer hohen Belastung der Verarbeitungseinrichtung nicht möglich ist, unter allen Umständen jederzeit exakt die jeweils aktuellen Größen verfügbar zu haben.

Die FR 2 685 958 A zeigt eine Vorrichtung, mittels der sporadisch auftretende Beschleunigungen detektiert werden können. Hierzu werden die Signale eines Beschleunigungssensors nach einer Aufbereitung der Signale abrufbar gespeichert.

Die US 4,924,830 zeigt ein System zur Auswertung der Signale eines Nockenwellensensors mittels einer Steuereinheit. Die Steuereinheit enthält unter anderem auch einen Speicher zur zeitweisen Speicherung von Daten.

Die US 5,586,305 zeigt ein Mess- und Steuersystem mit einer flexiblen Struktur, bei dem eine Vielzahl von Einzelwertmessungen als Funktion der Zeit detektiert werden.

Die EP 0 903 655 A zeigt ein Steuerungssystem mit einem Sensorknoten zum Verbinden eines Sensors über eine Schnittstelle mit einem Kommunikationsweg.

Die US 5,659,302 zeigt ein Verfahren und eine Vorrichtung zur Überwachung der Behandlung von Gütern. Hierzu werden Sensordaten zwischengespeichert.

Die WO 96 01979 zeigt eine Sensorsignalauswertung mit einer Schnittstelle zwischen dem Sensor und der Auswerteeinheit. Die eingehenden Sensorsignale werden dabei mit der jeweiligen Eingangszeit versehen.

Der vorliegenden Erfindung liegt die Aufgabe zugrunde, die Einrichtung gemäß dem Oberbegriff des Patentanspruchs 1 derart weiterzubilden, daß der Verarbeitungseinrichtung unter allen Umständen jederzeit exakt die jeweils aktuellen Größen zur Verfügung gestellt werden können.

Diese Aufgabe wird erfindungsgemäß durch die im kennzeichnenden Teil des Patentanspruchs 1 beanspruchten Merkmale gelöst.

Demnach ist vorgesehen, daß zwischen dem Sensor und der Verarbeitungseinrichtung eine Schnittstelle vorgesehen ist, in welcher vom Sensor erfaßte Größen zusammen mit den Zeitpunkten, zu denen die betreffenden Größen erfaßt wurden, speicherbar sind.

Durch das Vorsehen einer Schnittstelle zwischen dem Sensor und der Verarbeitungseinrichtung können die vom Sensor erfaßten Werte zu anderen Zeitpunkten oder aus anderen Anlässen und/oder anders codiert ausgegeben werden als sie der Verarbeitungseinrichtung zugeführt werden. Der Umstand, daß die Schnittstelle die Erfassungsgrößen nicht nur etwa durchleitet, sondern zusammen mit den Erfassungszeiten speichert, ermöglicht es ferner, daß die durch den Sensor zu erfassende Größen für Zeitpunkte, die vor, zwischen oder nach den Erfassungszeiten der gespeicherten Erfassungsgrößen/Erfassungszeiten-Paare liegen, berechnet oder geschätzt werden können.

Dies erweist sich in mehrfacher Hinsicht als vorteilhaft. Bei entsprechender Ausbildung der Schnittstelle ist es nämlich möglich,

- daß die Verarbeitungseinrichtung mit minimalem Aufwand auf eine gewünschte Art und Weise jederzeit aktuelle Daten erhalten kann, und

- daß sich der Sensor ohne Auswirkungen auf die Verarbeitungseinrichtung durch einen anders arbeitenden Sensor austauschen läßt.

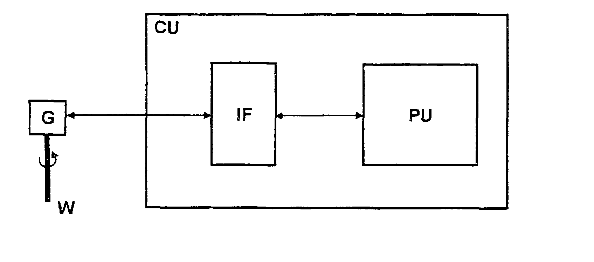

Vorteilhafte Weiterbildungen der Erfindung sind den Unteransprüchen, der folgenden Beschreibung und der Figur entnehmbar.

Die Erfindung wird nachfolgend anhand von Ausführungsbeispielen unter Bezugnahme auf die Figur näher erläutert.

Die Figur zeigt schematisch den Aufbau der nachfolgend näher beschriebenen Einrichtung zur Übertragung einer von einem Sensor erfaßten Größe an eine die Größe verarbeitende Verarbeitungseinrichtung.

Die Einrichtung ist im betrachteten Beispiel zum Einsatz in einem Kraftfahrzeug mit Brennkraftmaschine ausgelegt. Der Sensor ist dabei ein Absolutwinkelgeber, durch welchen die Stellung der Nockenwelle erfaßt wird, und die Verarbeitungseinrichtung ist eine im Steuergerät des Kraftfahrzeuges enthaltener Mikrocontroller (oder eine sonstige programmgesteuerte Einheit wie beispielsweise ein Mikroprozessor).

Es sei bereits an dieser Stelle darauf hingewiesen, daß hierauf keine Einschränkung besteht. Die Einrichtung kann auch in beliebigen anderen Systemen für beliebige andere Zwecke eingesetzt werden, und beliebige andere Sensoren und/oder beliebige andere Verarbeitungseinrichtungen aufweisen.

Zwar erweisen sich die nachfolgend beschriebenen Besonderheiten der betrachteten Einrichtung bei Sensoren, die bestimmte Parameter wie beispielsweise den Winkel einer Welle, die Geschwindigkeit, eine Temperatur etc. quantitativ erfassen, als besonders vorteilhaft, doch lassen sich die Besonderheiten durchaus auch bei andersartigen Sensoren (beispielsweise bei Sensoren, die nur auf bestimmte Zustände oder Ereignisse reagieren) nutzbringend einsetzen.

Die vorliegend betrachtete Einrichtung zeichnet sich dadurch aus, daß zwischen dem Sensor und der Verarbeitungseinrichtung eine Schnittstelle vorgesehen ist, in welcher vom Sensor erfaßte Größen zusammen mit den Zeitpunkten, zu denen die betreffenden Größen erfaßt wurden, speicherbar sind.

Die vorliegend betrachtete Einrichtung ist in der Figur dargestellt. Dabei sind der Absolutwinkelgeber mit dem Bezugszeichen G bezeichnet, die Welle, deren Winkelstellung der Absolutwinkelgeber G zu erfassen hat, mit dem Bezugszeichen W, der Mikrocontroller mit dem Bezugszeichen PU, das den Mikrocontroller enthaltende Steuergerät mit dem Bezugszeichen CU, und die Schnittstelle zwischen dem Absolutwinkelgeber G und dem Mikrocontroller PU mit dem Bezugszeichen IF.

Es sei bereits an dieser Stelle darauf hingewiesen, daß die Schnittstelle IF nicht wie im vorliegend betrachteten Beispiel angeordnet sein muß. Sie kann auch außerhalb des Steuergerätes CU vorgesehen sein; sie kann aber auch Bestandteil des Mikrocontrollers PU oder einer sonstigen Verarbeitungseinrichtung sein bzw. - allgemeiner ausgedrückt - mit der Verarbeitungseinrichtung eine zusammenhängende Einheit bilden, beispielsweise auf dem selben Chip untergebracht sein.

Dadurch, daß der Absolutwinkelgeber G und der Mikrocontroller PU nicht direkt, sondern "nur" mittelbar über die Schnittstelle IF miteinander verbunden sind, kann die Übertragung von Daten zwischen dem Absolutwinkelgeber G und der Schnittstelle IF auf eine andere Art und Weise erfolgen wie die Übertragung der Daten zwischen der Schnittstelle IF und dem Mikrocontroller PU; die Übertragung von Daten zwischen dem Absolutwinkelgeber G und der Schnittstelle IF, und die Übertragung der Daten zwischen der Schnittstelle IF und dem Mikrocontroller PU sind unabhängig voneinander auf beliebige Art und Weise durchführbar. So ist es beispielsweise möglich, die Übertragung von Daten zwischen dem Absolutwinkelgeber G und der Schnittstelle IF durch impulsweitenmodulierte Signale, also nach der eingangs genannten Möglichkeit B2, und die Übertragung der Daten zwischen der Schnittstelle IF und dem Mikrocontroller PU durch analoge Signale, also nach der Möglichkeit B1 erfolgen zu lassen.

Darüber hinaus können auch die Zeitpunkte, zu denen der Absolutwinkelgeber die von ihm erfaßten Größen ausgibt, und die Anlässe, aus denen der Absolutwinkelgeber die von ihm erfaßten Größen ausgibt, unabhängig von den Zeitpunkten und Anlässen sein, zu denen bzw. aufgrund welcher vom Absolutwinkelgeber G erfaßte Größen in den Mikrocontroller PU übernommen werden. So ist es beispielsweise möglich, daß die vom Absolutwinkelgeber erfaßten Größen in vorbestimmten zeitlichen Abständen, also nach der eingangs genannten Möglichkeit A1 an die Schnittstelle IF ausgegeben werden, wohingegen die Weiterleitung der betreffenden Daten von der Schnittstelle IF zum Mikrocontroller PU darauf abgestimmt ist, daß die Übernahme der Daten in den Mikrocontroller PU auf spezielle Anforderung durch ein in Mikrocontroller ablaufendes Programm, also nach der eingangs genannten Übernahme-Möglichkeit A1 erfolgt.

Durch die Einfügung der Schnittstelle IF zwischen den Absolutwinkelgeber G und den Mikrocontroller PU können auch Übernahme-Möglickeiten (A1, A2) und Übertragungs-Möglichkeiten (B1, B2, B3) miteinander kombiniert werden, die sich ohne die Schnittstelle nicht kombinieren lassen. Beispielsweise können Daten, die vom Absolutwinkelgeber G als impulsweitenmoduliertes Signal, also nach Übertragungs-Möglichkeit B2 ausgegeben werden, auf spezielle Anforderung durch ein in Mikrocontroller ablaufendes Programm, also nach Übernahme-Möglichkeit A1 in den Mikrocontroller PU übernommen werden.

Durch die vielen Kombinationsmöglichkeiten kann die Übertragung der vom Absolutwinkelgeber G erfaßten Größen an den Mikrocontroller PU jeweils optimal an die gegebenen Verhältnisse angepaßt werden. Übertragung und Übernahme der Daten können so maximal sicher und gleichzeitig unter minimaler Belastung des Mikrocontrollers erfolgen.

In der Schnittstelle IF werden, wie vorstehend bereits erwähnt wurde, die vom Absolutwinkelgeber G erfaßte Größen (Winkel) zusammen mit den Zeitpunkten, zu denen die betreffenden Größen erfaßt wurden, gespeichert. Dies eröffnet die Möglichkeit, daß die dem Mikrocontroller PU zugeführten Größen unter allen Umständen (insbesondere auch dann, wenn der Absolutwinkelgeber "nur" in vorbestimmten zeitlichen Abständen Daten ausgibt) die jeweils aktuellen Größen der zu erfassenden Parameter repräsentieren. Die Speicherung der vom Absolutwinkelgeber erfaßten Größen zusammen mit der Erfassungszeit ermöglicht es nämlich, die jeweils aktuelle Größe des vom Absolutwinkelgeber zu erfassenden Parameters durch Extrapolation oder dergleichen Schätzverfahren zu ermitteln.

Die Speicherung der vom Absolutwinkelgeber G erfaßten Größen zusammen mit den zugeordneten Erfassungszeiten wird von der Schnittstelle IF vollkommen selbständig, also ohne Mitwirkung oder Beteiligung durch den Mikrocontroller PU durchgeführt. Der Mikrocontroller wird also durch das Vorsehen und den Betrieb der Schnittstelle IF nicht belastet. Die Speicherung der in der Schnittstelle zu speichernden Daten erfolgt im betrachteten Beispiel rein hardwaremäßig.

Selbstverständlich kann die Speicherung der Daten auch durch einen Mikrocontroller oder eine sonstige programmgesteuerte Einheit oder unter Mitwirkung eines Mikrocontrollers oder einer sonstigen programmgesteuerten Einheit erfolgen; die Mitwirkung eines Mikrocontrollers beim Speichern von Daten kann dabei beispielsweise darin bestehen, daß die Speicherung der zu speichernden Daten unter Verwendung eines sogenannten Peripheral Tranaction Servers (PTS) des Mikrocontrollers erfolgt.

Wann (im Ansprechen auf welche Ereignisse) oder in welchen zeitlichen Abständen vom Absolutwinkelgeber erfaßte Größen gespeichert werden, ist keinen Einschränkungen unterworfen. Im einfachsten Fall erfolgt die Speicherung in vorbestimmten konstanten Zeitabständen. Für den Fall, daß die vom Absolutwinkelgeber erfaßten Größen periodisch durch ein impulsweitenmoduliertes Signal zur Schnittstelle übertragen werden, kann der zeitliche Abstand beispielsweise die Periode des impulsweitenmodulierten Signals sein. Die Größe der Zeitabstände kann aber prinzipiell prinzipiell beliebig festgelegt werden. Es kann aber auch vorgesehen werden, die vom Absolutwinkelgeber erfaßten Größen jeweils dann zu speichern, wenn diese vorbestimmte Werte erreicht haben oder wenn beliebige andere Zustände oder Ereignisse eingetreten sind.

Für den Fall, daß die Speicherung der vom Absolutwinkelgeber erfaßten Größen und die zugeordneten Erfassungszeiten in vorbestimmten zeitlichen Abständen $T$ gespeichert werden, können die Erfassungsgrößen/Erfassungszeitpunkt-Paare beispielsweise folgende Werte aufweisen:

| Erfassungsgröße | 34° | 38,5° | 42,5° | 47° | 51° |
|---|---|---|---|---|---|
| Erfassungszeitpunkt | $t_0$ | $t_0+T$ | $t_0+2T$ | $t_0+3T$ | $t_0+4T$ |

Weil nicht nur etwa ein Erfassungsgrößen/Erfassungszeitpunkt-Paar, sondern eine Vielzahl von Erfassungsgrößen/Erfassungszeitpunkt-Paaren gespeichert ist, können beispielsweise durch Extrapolation oder dergleichen Schätzverfahren die Größen ermittelt werden, die sich nach dem Zeitpunkt einstellen, zu dem die zuletzt gespeicherte Größe erfaßt wurde. So ist es im betrachteten Beispiel etwa möglich, aus den gespeicherten Erfassungsgrößen/Erfassungszeitpunkt-Paaren zu ermitteln, welche Winkelstellung $\alpha$ zum Zeitpunkt $t_0+4,5T$ vorliegt.

$$\alpha(t_0+4,5T) = f\,(t_0+4,5T;$$

$$34\,°;\ t_0;$$

$$38,5°;\ t_0+T;$$

$$42,5°;\ t_0+2T;$$

$$47°;\ t_0+3T;$$

$$51°;\ t_0+4T)$$

Beispielsweise kann festgelegt werden, daß

$$\alpha(t_0+4,5T) = 51° + (51°-34°)/(t_0+4T-t_0) * (t_0+4,5T-(t_0+4T)),$$

also 53,125° beträgt.

Je nach dem Drehverhalten der Welle W und/oder sonstigen Präferenzen kann die Winkelstellung $\alpha$ selbstverständlich auch nach anderen Algorithmen berechnet werden.

Die ermittelte Winkelstellung $\alpha$ ist im Idealfall exakt die aktuelle Winkelstellung der zu überwachenden Welle W. Damit kann dem Mikrocontroller PU unter allen Umständen jederzeit die aktuelle Winkelstellung bereitgestellt werden.

Erfassungsgrößen/Erfassungszeitpunkt-Paare, die für gegebenenfalls erforderliche Extrapolationen, Interpolationen, oder sonstige Schätzungen nicht mehr benötigt werden, können gelöscht werden.

Das Vorsehen der Schnittstelle IF kann sich auch beim Ersatz eines Absolutwinkelgebers durch einen anderen Absolutwinkelgeber vorteilhaft auswirken. Auch wenn der neue Absolutwinkelgeber die erfaßten Daten zu anderen Anlässen ausgibt und/oder die Daten auf andere Art und Weise überträgt, kann der Mikrocontroller PU unverändert weiterarbeiten; es muß lediglich die Schnittstelle IF an die veränderten Verhältnisse angepaßt werden, was sich jedoch vergleichsweise einfach bewerkstelligen läßt.

Durch die vorstehend beschriebene Einrichtung kann der Verarbeitungseinrichtung mit minimalem Aufwand unter allen Umständen jederzeit exakt die jeweils aktuelle Größe des durch den Sensor zu erfassenden Parameters zur Verfügung gestellt werden.

**Patentansprüche**

1. Einrichtung zur Übertragung einer von einem Sensor (G) erfassten Größe an eine die Größe verarbeitende Verarbeitungseinrichtung (PU), wobei der Sensor (G) ein Absolutwinkelgeber zum Erfassen der Winkelstellung einer Nocken- oder Kurbelwelle einer Brennkraftmaschine ist und zwischen dem Sensor (G) und der Verarbeitungseinrichtung (PU) eine Schnittstelle (IF) vorgesehen ist, **dadurch gekennzeichnet, dass**

   - in der Schnittstelle (IF) vom Sensor erfasste Größen zusammen mit den Zeitpunkten, zu denen die betreffenden Größen erfasst wurden, gespeichert werden, wobei in der Schnittstelle (IF) mehrere Erfassungsgrößen/Erfassungszeitpunkt-Paare gespeichert werden, und
   - die Schnittstelle (IF) in der Lage ist, basierend auf den gespeicherten Erfassungsgrößen/Erfassungszeitpunkt-Paaren die durch den Sensor (G) zu erfassende Größen für Zeitpunkte, die vor, zwischen oder nach den Erfassungszeiten der gespeicherten Erfassungsgrößen/Erfassungszeiten-Paare liegen, zu berechnen oder zu schätzen.

2. Einrichtung nach Anspruch 1, **dadurch gekennzeichnet, dass** die Schnittstelle (IF) vom Sensor (G) erhaltene Daten anders codiert zur Verarbeitungseinrichtung (PU) ausgeben kann als sie vom Sensor erhalten hat.

3. Einrichtung nach Anspruch 1 oder 2, **dadurch gekennzeichnet, dass** die Schnittstelle (IF) vom Sensor (G) erhaltene Daten zu anderen Zeitpunkten, in anderen zeitlichen Abständen oder aus anderen Anlässen zur Verarbeitungseinrichtung (PU) ausgeben kann als sie vom Sensor erhalten hat.

4. Einrichtung nach einem der vorhergehenden Ansprüche, **dadurch gekennzeichnet, dass** die Verarbeitungseinrichtung (PU) eine programmgesteuerte Einheit eines Kraftfahrzeug-Steuergerätes (CU) ist.

5. Einrichtung nach Anspruch 7, **dadurch gekennzeichnet, dass** die Schnittstelle (IF) im Kraftfahrzeug-Steuergerät (CU) vorgesehen ist.

6. Einrichtung nach einem der vorhergehenden Ansprüche, **dadurch gekennzeichnet, dass** die Schnittstelle (IF) und die Verarbeitungseinrichtung (PU) als eine zusammenhängende Einheit ausgebildet sind.


**Claims**

1. Device for transmitting a variable sensed by a sensor (G) to a processing device (PU) which processes the variable, wherein the sensor (G) is an absolute angle signal transmitter for sensing the angular position of a camshaft or crankshaft of an internal combustion engine and an interface (IF) is provided between the sensor (G) and the processing device (PU), **characterized in that**

   - variables sensed by the sensor are stored at the interface (IF) together with the times at which the respective variables were sensed, wherein a plurality of sensed variables/sensing time pairs are stored at the interface (IF), and
   - the interface (IF) is capable of calculating or estimating, on the basis of the sensed variables/sensing time pairs which have been stored, the variables to be sensed by the sensor (G) for times which lie before, between or after the sensing times of the stored sensed variables/sensing time pairs.

2. Device according to Claim 1, **characterized in that** the interface (IF) can output data received by the sensor (G) to the processing device (PU) with different coding than the coding which it has received from the sensor.

3. Device according to Claim 1 or 2, **characterized in that** the interface (IF) can output data received from the sensor (G) to the processing device (PU) at different times, at different time intervals or for different reasons than those which it has received from the sensor.

4. Device according to one of the preceding claims, **characterized in that** the processing device (PU) is a program-controlled unit of a motor vehicle control unit (CU).

5. Device according to Claim 7, **characterized in that** the interface (IF) is provided in the motor vehicle control unit (CU).

6. Device according to one of the preceding claims, **characterized in that** the interface (IF) and the processing device (PU) are embodied as one coherent unit.

**Revendications**

1. Dispositif de transmission d'une grandeur saisie par un capteur (G) à une installation de traitement (PU) pour traiter cette grandeur, le capteur (G) étant un capteur d'angle absolu pour capter la position angulaire de l'arbre à cames ou du vilebrequin d'un moteur à combustion interne et une interface (IF) séparant le capteur (G) de l'installation de traitement (PU),
   **caractérisé en ce que**

   - dans l'interface (IF), les grandeurs saisies par le capteur sont enregistrées en mémoire avec les instants auxquels les grandeurs ont été saisies, et plusieurs paires grandeur saisie/instant de la saisie sont enregistrées dans l'interface (IF), et
   - l'interface (IF) est en mesure, en s'appuyant sur les paires de grandeur saisie/instant de saisie, enregistrées, de calculer ou d'évaluer les paires de grandeurs saisie/instant de saisie, enregistrées pour des instants qui se situent en amont dans l'intervalle ou après les instants de saisie.

2. Installation selon la revendication 1,
   **caractérisée en ce que**
   l'interface (IF) transmet à l'installation de traitement (PU) les données fournies par le capteur (G), avec un codage différent de celui des données reçues du capteur.

3. Installation selon la revendication 1 ou 2,
   **caractérisée en ce que**
   l'interface (IF) transmet les données reçues du capteur (G) à d'autres instants, à d'autres intervalles de temps ou à d'autres occasions vers l'installation de traitement (PU) que ceux correspondant à la réception des informations en provenance du capteur.

4. Installation selon l'une des revendications précédentes,
   **caractérisée en ce que**
   l'installation de traitement (PU) est une unité commandée par programme appartenant à un appareil de commande de véhicule automobile (CU).

5. Installation selon la revendication 4,
   **caractérisée en ce que**
   l'interface (IF) se trouve dans l'appareil de commande du véhicule automobile (CU).

6. Installation selon l'une des revendications précédentes,
   **caractérisée en ce que**
   l'interface (IF) et l'installation de traitement (PU) constituent une seule unité.